(19) Europäisches Patentamt
European Patent Office
Office européen des brevets

(11) **EP 1 256 479 A1**

(12) **EUROPÄISCHE PATENTANMELDUNG**

(43) Veröffentlichungstag:
**13.11.2002 Patentblatt 2002/46**

(51) Int Cl.⁷: **B60K 41/00**

(21) Anmeldenummer: **01110952.7**

(22) Anmeldetag: **07.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Ford Global Technologies, Inc.,
A subsidiary of Ford Motor Company
Dearborn, Michigan 48126 (US)**

(72) Erfinder: **Borrmann, Dirk
50354 Hurth (DE)**

(74) Vertreter: **Drömer, Hans-Carsten, Dipl.-Ing.
Ford-Werke Aktiengesellschaft,
Patentabteilung NH/DRP,
Henry-Ford-Strasse 1
50725 Köln (DE)**

(54) **Verfahren zur Fahrer-Typ-Erkennung**

(57) Die Erfindung betrifft ein Verfahren zur Anpassung des Kraftfahrzeugverhaltens an den Fahrstil eines Fahrers. Zur Klassifikation des Fahrstils wird dabei unter anderem der Mittelwert der Bremsbeschleunigung $a_{Brems}$ des Fahrzeugs während Betätigungen der Bremse berechnet. Ein hoher Wert für diese Größe deutet z. B. auf einen "sportlichen" Fahrstil hin, während ein geringerer Wert einen "ruhigen" Fahrstil anzeigt. Neben der mittleren Bremsbeschleunigung $a_{Brems}$ können auch andere Größen wie die Fahrzeugbeschleunigung ($dv/dt$), deren positiver Mittelwert ($a_{Accel}$) und/oder die Stellung ($\alpha$) des Gaspedals zu einer Klassifizierung des Fahrstils verwendet werden. Das Kraftfahrzeugverhalten lässt sich insbesondere über eine Veränderung der Motorsteuerung und/oder der Getriebesteuerung an den festgestellten Fahrstil anpassen.

Fig. 1

**Beschreibung**

Die Erfindung betrifft ein Verfahren zur Anpassung des Kraftfahrzeugverhaltens an den Fahrstil eines Fahrers. Ferner betrifft die Erfindung ein Kraftfahrzeug mit einer Einrichtung zur automatischen Klassifikation des Fahrstils eines Fahrers und eine Steuerungseinrichtung, durch die das Kraftfahrzeugverhalten fahrstilabhängig anpasst wird.

Es ist bekannt, ein Kraftfahrzeug mit Einrichtungen auszustatten, durch welche anhand vorgegebener Kriterien der Fahrstil des Fahrers, der jeweils das Kraftfahrzeug gerade steuert, eingeschätzt und klassifiziert werden kann. Derartige Einrichtungen sind üblicherweise mit einer Steuerungseinrichtung für das Kraftfahrzeug verbunden, deren Verhalten sich in Abhängigkeit vom festgestellten Fahrstil beziehungsweise Fahrertyp verändert.

So können beispielsweise die Typen eines "sportlichen" Fahrers beziehungsweise Fahrstils und eines "ruhigen" Fahrers beziehungsweise Fahrstils anhand der beobachteten positiven Beschleunigungen des Fahrzeugs unterschieden werden. Ein "sportlicher" Fahrer erwartet typischerweise von seinem Fahrzeug einen schnellen Drehmomentaufbau und kurze Reaktionszeiten auf die Betätigung des Gaspedals, was von der Steuerungseinrichtung zum Beispiel durch eine Bevorzugung niedriger Gänge eines automatischen Getriebes unterstützt werden kann. Im Gegensatz hierzu erwartet ein "ruhiger" Fahrer möglichst sanfte Übergänge zwischen verschiedenen Gängen, was die Steuerungseinrichtung durch die Bevorzugung höherer Gänge eines automatischen Getriebes unterstützen kann. Die ruhigere Fahrweise schlägt sich dabei auch in einem geringeren Kraftstoffverbrauch sowie in geringeren Werten für Lärm, Vibrationen und Rauhigkeit (NVH: noise, vibration, harshness) nieder. Nachteilig bei den bekannten Systemen ist jedoch, dass eine verhältnismäßig lange Zeit benötigt wird, um den Fahrstil eines (neuen) Fahrers richtig zu klassifizieren, bzw. dass häufig eine unzutreffende Klassifikation erfolgt.

Vor diesem Hintergrund war es Aufgabe der vorliegenden Erfindung, ein Verfahren zur Anpassung des Kraftfahrzeugverhaltens dahingehend zu verbessern, dass die vorgenommene Anpassung des Kraftfahrzeugverhaltens schnell und zuverlässig den Wünschen des Fahrers entspricht.

Diese Aufgabe wird durch ein Verfahren mit den Merkmalen des Anspruchs 1 sowie ein Kraftfahrzeug mit den Merkmalen des Anspruchs 7 gelöst. Vorteilhafte Ausgestaltungen sind in den Unteransprüchen enthalten.

Das Verfahren zur Anpassung des Kraftfahrzeugverhaltens an den Fahrstil eines Fahrers zeichnet sich dadurch aus, dass während Bremsvorgängen die Bremsbeschleunigung des Kraftfahrzeugs gemessen wird. Die nachfolgende automatische Klassifikation des Fahrstils hängt dann - zumindest unter anderem - von den so gewonnenen Messwerten für die Bremsbeschleunigung ab.

Das Verfahren berücksichtigt somit bei der Klassifikation des Fahrstils beziehungsweise Fahrertyps auch das Bremsverhalten. Kurze, scharfe Bremsvorgänge mit hohen (negativen) Bremsbeschleunigungen deuten dabei eher auf einen "sportlichen" Fahrer hin als ein vorausschauendes Bremsen mit geringeren Bremsbeschleunigungen. Bei der Auswertung der Bremsbeschleunigung kann insbesondere ein Mittelwert der Bremsbeschleunigung gebildet und der Anpassung des Kraftfahrzeugverhaltens zugrunde gelegt werden. Das vorgeschlagene Verfahren stellt somit ein sehr aussagekräftiges Kriterium für die richtige Klassifikation des Fahrstils beziehungsweise des Fahrertyps bereit. Da die korrekte Anpassung des Kraftfahrzeugverhaltens kritisch davon abhängt, dass zuvor der richtige Fahrstil beziehungsweise Fahrertyp ermittelt wurde, erhöht sich mit der Zuverlässigkeit dieser Klassifikation auch die Zuverlässigkeit des gesamten Systems.

Die Anpassung des Kraftfahrzeugverhaltens erfolgt vorzugsweise durch eine Veränderung der Motorsteuerung und/oder der Getriebesteuerung des Kraftfahrzeugs. Diese Steuerungen haben entscheidenden Einfluss darauf, wie schnell Drehmomente aufgebaut oder abgebaut werden, was wiederum ein wichtiges Kriterium bei der Realisation der unterschiedlichen Fahrstile ist.

Vorzugsweise werden dabei die Motorsteuerung und/oder die Getriebesteuerung in Bezug auf die Geschwindigkeit des Drehmomentaufbaus, die Geschwindigkeit des Drehmomentabbaus und/oder auf die Gangwechselcharakteristik verändert. Die Gangwechselcharakteristik beschreibt bei einem Automatikgetriebe die Schaltpunkte, also zum Beispiel die Motordrehzahlen, bei welchen von einem Gang in den nächsten herauf oder herunter geschaltet wird. Zur Anpassung an einen "sportlichen" Fahrstil wird z.B. die Gangwechselcharakteristik durch Heraufsetzen der Schaltstufen angepasst, so dass bei höheren Drehzahlen tendenziell noch länger im niedrigen Gang gefahren wird.

Weiterhin besteht die Möglichkeit, das Kraftfahrzeugverhalten durch Veränderung der Charakteristik von Gaspedal und/oder Bremspedal anzupassen. So wird bei einer ruhigeren Fahrweise vorzugsweise die Empfindlichkeit des Gaspedals herabgesetzt, damit sich die Tendenz zum Auftreten hoher Beschleunigungen des Fahrzeugs verringert.

Weiterhin kann bei einem Fahrzeug mit einer aktiven Stoßdämpferanlage in einer vorteilhaften Ausgestaltung der Erfindung vorgesehen sein, dass abhängig von der Klassifikation des Fahrstils die Härte der Fahrwerksdämpfung verändert wird. Vorzugsweise kann bei Erkennung eines "sportlichen" Fahrers eine härtere Dämpfungscharakteristik eingestellt werden.

Bei einem Fahrzeug mit elektrisch oder elektrisch-hydraulisch unterstützter Lenkung kann weiterhin abhängig von der Klassifikation des Fahrstils die Lenkunterstützungscharakteristik verändert werden, insbesondere die aufzuwendenden Lenkkräfte und die Lenkprogression. So kann bei Erkennung eines "sportlichen" Fahrertyps die Lenkcharakteristik straffer und direkter ausgestaltet werden als bei Erkennung eines weniger sportlichen Fahrertyps.

Des weiteren kann das Kraftfahrzeugverhalten in Hinblick auf die Entwicklung von Lärm, Vibrationen und Rauhigkeit (NVH) und/oder in Hinblick auf den Kraftstoffverbrauch angepasst werden. Bei einem "ruhigeren" Fahrstil erfolgt die Anpassung des Kraftfahrzeugverhaltens insbesondere so, dass die genannten Größen tendenziell verringert werden.

Die Messung der Bremsbeschleunigung während Bremsvorgängen stellt vorzugsweise nur einen von mehreren Indikatoren für den Fahrstil eines Fahrers dar. Weitere Größen, von denen die automatische Klassifikation des Fahrstils abhängen kann, sind insbesondere Messwerte für die Fahrzeuggeschwindigkeit, für die Fahrzeugbeschleunigung, für die Motordrehzahl, für die Gaspedalstellung oder für die Veränderungsrate der Gaspedalstellung. Diese Messwerte können als originäre Messwerte und/oder in Form von gefilterten Werten verwendet werden.

Die Erfindung betrifft weiterhin ein Kraftfahrzeug enthaltend eine Einrichtung zur automatischen Klassifikation des Fahrstils eines Fahrers sowie eine damit gekoppelte Steuerungseinrichtung, welche das Kraftfahrzeugverhalten in Abhängigkeit vom festgestellten Fahrstil anpasst. Das Kraftfahrzeug ist dadurch gekennzeichnet, dass die Einrichtung zur automatischen Klassifikation des Fahrstils Mittel zur Messung der Bremsbeschleunigung während Bremsvorgängen aufweist. Ferner ist diese Einrichtung so ausgestaltet, dass die von ihr vorgenommene automatische Klassifikation des Fahrstils (zumindest unter anderem) von den Messwerten für die Bremsbeschleunigung abhängt.

Das Kraftfahrzeug kann ferner so weitergebildet werden, dass es die Durchführung eines Verfahrens gemäß den oben erläuterten Varianten erlaubt. Ein derartiges Kraftfahrzeug passt sein Verhalten schnell und mit hoher Zuverlässigkeit an den Fahrstil des jeweiligen Fahrers an, so dass dessen Anforderungen an das Kraftfahrzeug optimal erfüllt werden.

Vorzugsweise weist der Motor des Kraftfahrzeugs Mittel zur elektrischen beziehungsweise elektronischen Kontrolle der Kraftstoffzufuhr auf. Wenn es sich um einen Ottomotor handelt, kann dieser insbesondere eine elektrische Drosselklappe für die Steuerung der Zufuhr der Luft aufweisen. Dabei liegt eine elektrische beziehungsweise elektronische Steuerung zwischen dem Gaspedal und der Drosselklappe, die ihr Verhalten besonders gut und in einfacher Weise im Sinne einer Anpassung an den detektierten Fahrstil verändern kann. In ähnlicher Weise kann sich die elektronische Steuerung bei einem Dieselmotor mit der Anpassung der Einspritzmenge dem Fahrstil des jeweiligen Fahrers optimal anpassen.

Als vorteilhaft erweist es sich ferner, wenn das Kraftfahrzeug ein Automatikgetriebe aufweist, da eine Beeinflussung der Getriebesteuerung für eine Anpassung des Kraftfahrzeugverhaltens gut geeignet ist.

Im Folgenden wird die Erfindung anhand der Figuren beispielhaft erläutert. Es zeigen:

Fig. 1    ein Flussdiagramm des Verfahrens zur Klassifikation des Fahrstils;

Fig. 2    das Zeitdiagramm der Fahrzeugbeschleunigung und der Bremsbetätigung sowie der Mittelwerte hiervon für einen "ruhigen" Fahrstil; und

Fig. 3    ein Zeitdiagramm entsprechend Figur 2 für einen "sportlichen" Fahrstil.

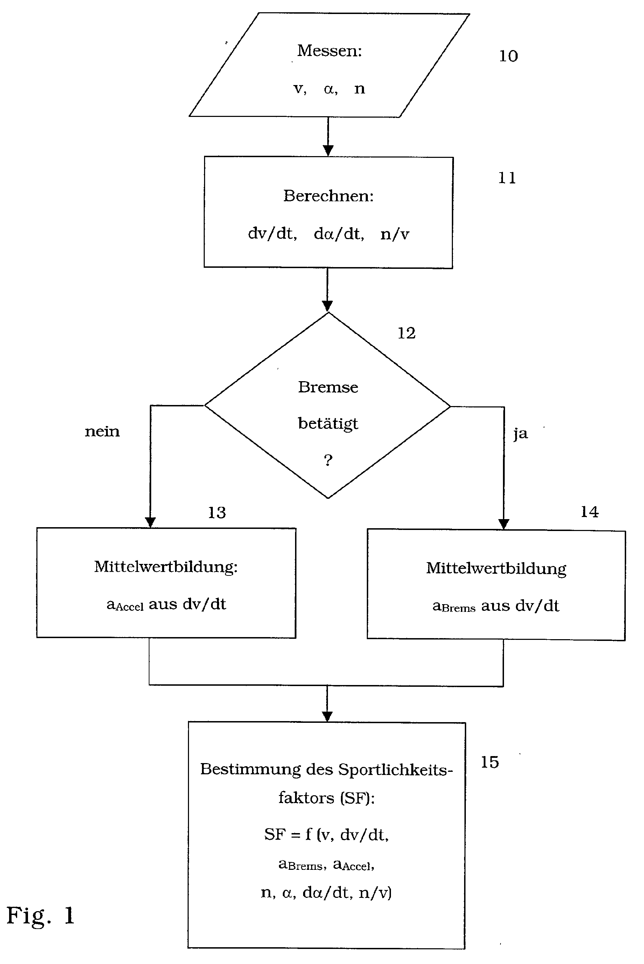

Die Erfindung betrifft ein Verfahren zur Anpassung des Kraftfahrzeugverhaltens an den Fahrstil des jeweiligen Fahrers, wobei die Klassifikation dieses Fahrstils mit Hilfe der Beobachtung des Bremsverhaltens des Kraftfahrzeugs verbessert wird. Fig. 1 zeigt diesbezüglich die verschiedenen Schritte eines beispielhaften Verfahrens zur Klassifikation des Fahrstils.

Bei diesem Verfahren werden in einem ersten Schritt 10 die Geschwindigkeit v des Fahrzeugs, die (Winkel-)Stellung $\alpha$ des Gaspedals sowie die Drehzahl n des Motors gemessen. Falls ein Messwert für die Stellung des Gaspedals nicht verfügbar ist, kann statt dessen auch der Drosselklappenwinkel oder eine verwandte Größe herangezogen werden.

Im nächsten Schritt 11 wird aus den gemessenen Größen die Fahrzeugbeschleunigung dv/dt, die Veränderungsrate der Pedalstellung d$\alpha$/dt sowie der Quotient n/v aus Drehzahl und Fahrzeuggeschwindigkeit berechnet.

Sodann wird bei Verzweigung 12 über einen geeigneten Sensor am Bremspedal und/oder im Bremssystem festgestellt, ob die Bremse vom Fahrer betätigt wird. Falls dies nicht der Fall ist, wird in Block 13 ein Mittelwert $a_{Accel}$ aus der in Schritt 11 bestimmten Fahrzeugbeschleunigung dv/dt berechnet bzw. fortgeführt.

Wenn jedoch die Bremse betätigt wird, wird in Schritt 14 ein Mittelwert der Bremsbeschleunigung $a_{Brems}$ aus der in Schritt 11 bestimmten Fahrzeugbeschleunigung dv/dt berechnet bzw. fortgeführt.

Für die in den zuletzt genannten Schritten 13 beziehungsweise 14 durchgeführten Mittelwertbildungen sind verschiedene Verfahren wie zum Beispiel ein PT1-Filter, ein gleitender Mittelwert, ein arithmetischer Mittelwert oder andere denkbar.

Schließlich wird im Schritt 15 aus den ermittelten Größen ein sogenannter "Sportlichkeitsfaktor" SF berechnet, der von den genannten Größen abhängt:

$$SF = f (v, dv/dt, a_{Brems}, a_{Accel}, n, \alpha, d\alpha/dt, n/v).$$

Die aufgezählten Größen sind dabei nur beispielhaft zu verstehen, da der Sportlichkeitsfaktor nach vielen verschiedenen Verfahren und in Abhängigkeit von unterschiedlichen Signalen beziehungsweise Rechenwerten bestimmt werden kann. Im einfachsten Fall ist der Sportlichkeitsfaktor dem Betrag der Bremsbeschleunigung proportional, d.h. je negativer $a_{Brems}$, desto "sportlicher" der Fahrstil.

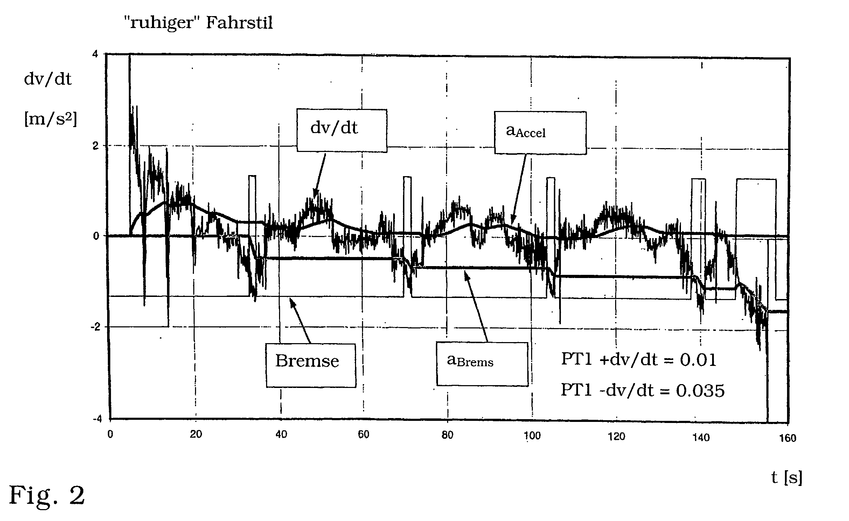

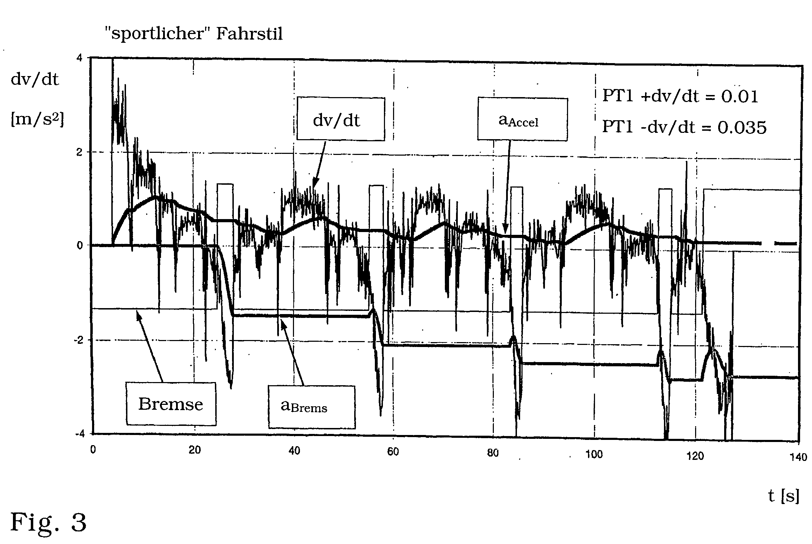

Die Figuren 2 und 3 stellen jeweils Ausschnitte aus der gemessenen Fahrzeugbeschleunigung dv/dt für einen "ruhigen" Fahrstil (Figur 2) beziehungsweise einen "sportlichen" Fahrstil (Figur 3) dar. Aus den kontinuierlichen Messwerten für die Fahrzeugbeschleunigung dv/dt wird entsprechend dem in Figur 1 dargestellten Verfahren der Mittelwert der positiven Fahrzeugbeschleunigung $a_{Accel}$ berechnet, welcher in den glatten, im positiven Beschleunigungsbereich liegenden Kurven dargestellt ist.

Die mit "Bremse" bezeichnete Kurve zeigt durch Ausschläge nach oben die Zeiten an, zu denen das Bremspedal betätigt wurde. Während dieser Zeiten wird entsprechend Schritt 14 aus Figur 1 der Mittelwert $a_{Brems}$ für die negative Bremsbeschleunigung berechnet, welcher als glatte, im positiven Beschleunigungsbereich liegende Kurve graphisch wiedergegeben ist. Die Mittelwertbildung für die Kurven $a_{Accel}$ bzw. $a_{Brems}$ erfolgt dabei mit einem PT1-Filter.

Wie einem Vergleich der Figuren 2 und 3 entnommen werden kann, äußert sich der Unterschied in den Fahrstilen in den Werten der mittleren negativen Bremsbeschleunigung $a_{Brems}$ besonders deutlich. Bei dem erfindungsgemäßen Verfahren kann daher mit hoher Zuverlässigkeit der jeweilige Fahrstil korrekt erkannt werden.

**Patentansprüche**

1. Verfahren zur Anpassung des Kraftfahrzeugverhaltens an den Fahrstil eines Fahrers, **dadurch gekennzeichnet, dass** während Bremsvorgängen die Bremsbeschleunigung ($a_{Brems}$) gemessen wird, und dass die automatische Klassifikation des Fahrstils von den so gewonnenen Messwerten abhängt.

2. Verfahren nach Anspruch 1, **dadurch gekennzeichnet, dass** das Kraftfahrzeugverhalten durch Veränderung der Motorsteuerung und/oder der Getriebesteuerung angepasst wird.

3. Verfahren nach Anspruch 2, **dadurch gekennzeichnet, dass** die Motorsteuerung und/oder die Getriebesteuerung in Bezug auf die Geschwindigkeit des Drehmomentaufbaus, die Geschwindigkeit des Drehmomentabbaus und/oder die Gangwechselcharakteristik und/oder verändert werden.

4. Verfahren nach einem der Ansprüche 1 bis 3, **dadurch gekennzeichnet, dass** das Kraftfahrzeugverhalten durch Veränderung der Charakteristik von Gaspedal und/oder Bremspedal und/oder einer aktiven Stoßdämpfung und/oder einer elektrisch oder hydraulisch unterstützten Lenkhilfe angepasst wird.

5. Verfahren nach einem der Ansprüche 1 bis 4, **dadurch gekennzeichnet, dass** das Kraftfahrzeugverhalten in Hinblick auf die Entwicklung von Lärm, Vibrationen und Rauhigkeit und/oder in Hinblick auf den Kraftstoffverbrauch angepasst wird.

6. Verfahren nach einem der Ansprüche 1 bis 5, **dadurch gekennzeichnet, dass** die automatische Klassifikation des Fahrstils von Messwerten für die Fahrzeuggeschwindigkeit (v), die Fahrzeugbeschleunigung (dv/dt), die Motordrehzahl (n), die Pedalstellung ($\alpha$), die Veränderungsrate der Pedalstellung (d$\alpha$/dt) und/oder von gefilterten Werten dieser Messwerte abhängt.

7. Kraftfahrzeug enthaltend eine Einrichtung zur automatischen Klassifikation des Fahrstils eines Fahrers sowie eine Steuerungseinrichtung, welche das Kraftfahrzeugverhalten in Abhängigkeit vom Fahrstil anpasst,
**dadurch gekennzeichnet, dass** die Einrichtung zur automatischen Klassifikation des Fahrstils Mittel zur Messung der Bremsbeschleunigung ($a_{Brems}$) während Bremsvorgängen aufweist und so eingerichtet ist, dass die automatische Klassifikation des Fahrstils von den gewonnenen Messwerten der Bremsbeschleunigung abhängt.

8. Kraftfahrzeug nach Anspruch 7, **dadurch gekennzeichnet, dass** es zur Durchführung eines Verfahrens nach mindestens einem der Ansprüche 1 bis 6 ausgebildet ist.

9. Kraftfahrzeug nach Anspruch 7 oder 8, **dadurch gekennzeichnet, dass** der Motor des Kraftfahrzeugs Mittel zur elektrischen Kontrolle der Kraftstoffzufuhr aufweist.

10. Kraftfahrzeug nach einem der Ansprüche 7 bis 9, **dadurch gekennzeichnet, dass** es ein Automatikgetriebe oder ein automatisiertes Handschaltgetriebe aufweist.

Messen:

v,  α,  n

10

Berechnen:

dv/dt,  dα/dt,  n/v

11

Bremse

betätigt

?

12

nein

ja

Mittelwertbildung:

$a_{Accel}$ aus dv/dt

13

Mittelwertbildung

$a_{Brems}$ aus dv/dt

14

Bestimmung des Sportlichkeitsfaktors (SF):

SF = f (v, dv/dt,

$a_{Brems}$, $a_{Accel}$,

n, α, dα/dt, n/v)

15

Fig. 1

"ruhiger" Fahrstil

Fig. 2

EP 1 256 479 A1

EP 1 256 479 A1

"sportlicher" Fahrstil

dv/dt

[m/s²]

dv/dt

$a_{Accel}$

PT1 +dv/dt = 0.01

PT1 -dv/dt = 0.035

Bremse

$a_{Brems}$

t [s]

Fig. 3

**Europäisches Patentamt**

## EUROPÄISCHER RECHERCHENBERICHT

Nummer der Anmeldung

EP 01 11 0952

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br>Y | EP 0 777 071 A (RENAULT)<br>4. Juni 1997 (1997-06-04)<br>* Ansprüche 1,3; Abbildungen 1,2 * | 1-3,6-8,<br>10<br>4,5,9 | B60K41/00 |
| Y | DE 44 01 416 A (DAIMLER BENZ AG)<br>20. Juli 1995 (1995-07-20)<br>* Abbildung * | 4 | |
| Y | US 4 853 720 A (ATAGO TAKESHI  ET AL)<br>1. August 1989 (1989-08-01)<br>* Spalte 6, Zeile 31 - Zeile 41 *<br>* Anspruch 6 * | 5,9 | |
| | | | **RECHERCHIERTE SACHGEBIETE (Int.Cl.7)**<br><br>B60K<br>B60T |

Der vorliegende Recherchenbericht wurde für alle Patentansprüche erstellt

| Recherchenort | Abschlußdatum der Recherche | Prüfer |
|---|---|---|
| DEN HAAG | 4. Oktober 2001 | Colonna, M |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 11 0952

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-10-2001

| Im Recherchenbericht angeführtes Patentdokument | Datum der Veröffentlichung | Mitglied(er) der Patentfamilie | Datum der Veröffentlichung |
|---|---|---|---|
| EP 0777071 A | 04-06-1997 | FR 2741931 A1<br>EP 0777071 A1 | 06-06-1997<br>04-06-1997 |
| DE 4401416 A | 20-07-1995 | DE 4401416 A1<br>FR 2715112 A1<br>GB 2285876 A ,B | 20-07-1995<br>21-07-1995<br>26-07-1995 |
| US 4853720 A | 01-08-1989 | JP 2564275 B2<br>JP 62261622 A<br>DE 3715423 A1<br>GB 2191023 A ,B<br>KR 9504606 B1 | 18-12-1996<br>13-11-1987<br>12-11-1987<br>02-12-1987<br>03-05-1995 |

Für nähere Einzelheiten zu diesem Anhang : siehe Amtsblatt des Europäischen Patentamts, Nr. 12/82